# EUROPÄISCHE PATENTSCHRIFT

(11) **EP 1 743 736 B1**
(45) Veröffentlichungstag und Bekanntmachung des Hinweises auf die Patenterteilung: **29.10.2008**
(21) Anmeldenummer: 06013889.8
(22) Anmeldetag: 05.07.2006
(51) Int. Cl.: B23Q 39/02, B23Q 7/00

(54) **Werkzeugmaschine und Verfahren mit zumindest einer Bearbeitungseinheit und zwei Werkstücktransportvorrichtungen**
Machine tool and process with at least a machining unit and two workpiece transporting devices
Machine-outil et procédé avec au moins une unité d'usinage et deux dispositifs de transport de pièces

(30) Priorität: 14.07.2005 DE 102005034431
(43) Veröffentlichungstag der Anmeldung: 17.01.2007
(73) Patentinhaber: Chiron-Werke GmbH & Co. KG, 78532 Tuttlingen (DE)
(72) Erfinder: Prust, Dirk, Dr., 78532 Tuttlingen (DE); Winkler, Hans-Henning, Dr., 78532 Tuttlingen (DE)
(74) Vertreter: Otten, Hajo

(56) Entgegenhaltungen:
- EP-A- 1 216 789
- EP-A- 1 342 535
- EP-A- 1 466 697
- WO-A-20/05005098
- DE-A1- 3 921 042

## Beschreibung

Die vorliegende Erfindung betrifft eine Werkzeugmaschine mit zumindest zwei Bearbeitungseinheiten mit jeweils zwei Arbeitsspindeln zur Aufnahme von Werkzeugen, um in einem Arbeitsraum Werkstücke zu bearbeiten, und zwei Transportvorrichtungen, mit denen Werkstücke zwischen dem Arbeitsraum und einer Be-/Entladestation transportiert werden.

Die Erfindung betrifft ferner ein Verfahren zum Bearbeiten von Werkstücken mit einer derartigen Werkzeugmaschine.

Werkzeugmaschinen und Verfahren zur Bearbeitung von Werkstücken in einem Arbeitsraum sind aus dem Stand der Technik zahlreich bekannt.

Neben immer höheren Genauigkeitsanforderungen an das Bearbeitungsergebnis unterliegen derartige Werkzeugmaschinen und Verfahren der weiteren Anforderung, dass der Durchsatz von Werkstücken durch derartige Werkzeugmaschinen bei konstruktiv geringem Aufwand und hoher Bearbeitungsgenauigkeit immer weiter erhöht werden soll.

Eine Werkzeugmaschine der eingangs genannten Art ist beispielsweise aus der DE 101 63 445 A1 bekannt, die eine Transferstraße mit mehreren Bearbeitungsstationen und einer ersten Transportvorrichtung beschreibt, mit der die Werkstücke zwischen den Bearbeitungsstationen transportiert werden. In den Bearbeitungsstationen sind zweite Transportvorrichtungen vorgesehen, wobei mittels eines an der ersten Transportvorrichtung angeordneten Greifers das Werkstück von der ersten auf die zweite Transportvorrichtung umgesetzt wird.

Das auf der zweiten Transportvorrichtung aufgespannte Werkstück wird dann in der jeweiligen Bearbeitungsstation bearbeitet, wobei das Werkstück während der Bearbeitung durch die zweite Transportvorrichtung verfahren wird, um es für unterschiedliche Bearbeitungen zu positionieren. In jeder Bearbeitungsstation kann das Werkstück auf gegenüberliegenden Seiten jeweils von mehreren Arbeitsspindeln bearbeitet werden.

Ferner ist ein Roboter vorgesehen, der zu bearbeitende Werkstücke auf die erste Transporteinheit lädt und bearbeitete Werkstücke von der ersten Transporteinheit entnimmt.

Bei dieser Transferstraße ist der Durchsatz von Werkstücken nicht hinreichend hoch, da der Werkstückwechsel selbst relativ langsam erfolgt, denn die erste Transportvorrichtung bedient die einzelnen Bearbeitungsstationen zeitlich nacheinander.

Bei einer aus der DE 103 34 285 A1 bekannten Werkzeugmaschine sind zwei Bearbeitungseinheiten mit jeweils mehreren Arbeitsspindeln vorgesehen, wobei die Bearbeitungseinheiten von gegenüberliegenden Seiten auf das Werkstück zugreifen. Die Arbeitsspindeln in einer derartigen Bearbeitungseinheit haben zueinander einen Abstand, der dem Abstand von Werkstücken entspricht, die in einer oder mehreren Spannvorrichtungen gehalten sind. Die Spannvorrichtungen sind verfahrbar und schwenkbar ausgebildet.

Auf diese Weise können in einem Bearbeitungsschritt an allen Werkstücken gleichzeitig identische Bearbeitungsvorgänge durchgeführt werden, wobei ferner die beiden Bearbeitungseinheiten mit ihren jeweiligen Arbeitsspindeln zeitgleich die Werkstücke auf gegenüberliegenden Seiten bearbeiten können.

Für beide Bearbeitungseinheiten können Werkzeugmagazine vorgesehen sein, um mit ein und derselben Bearbeitungseinheit nacheinander an derselben Seite eines Werkstückes unterschiedliche Bearbeitungsvorgänge durchführen zu können.

Auch bei dieser Werkzeugmaschine ist der Durchsatz von Werkstücken nicht hinreichend hoch, denn zwischen den einzelnen Bearbeitungsschritten erfordert der Werkzeugwechsel entsprechend lange Nebenzeiten.

Aus der DE 39 21 042 A1 ist eine Werkzeugmaschine bekannt mit zwei beweglichen Tischen, auf welchen ein Werkstück aufgespannt werden kann. Die Tische sind parallel zueinander angeordnet und jeweils zwischen einem Bearbeitungsbereich und einem Aufspannbereich bewegbar. In den Bearbeitungsbereichen können auf die Tische aufgespannte Werkstücke mittels eines Werkzeugs bearbeitet werden, das von einem bewegbaren Spindelkopf gehalten wird.

Aus der EP 1 216 789 A2 ist eine Vertikaldrehmaschine bekannt mit zwei vertikal angeordneten Werkstückspindeln und zwei Werkzeugträgern. Die Werkstückspindeln sind auf einem Führungsträger derart verfahrbar, dass sie aus einem Arbeitsbereich heraus horizontal quer zur horizontalen Verfahrbarkeit des Werkzeugträgers verfahren werden können.

Vor diesem Hintergrund liegt der vorliegenden Erfindung die Aufgabe zugrunde, eine Werkzeugmaschine der eingangs genannten Art bereitzustellen, bei der der Durchsatz von Werkstücken auf konstruktiv einfache Weise erhöht werden kann.

Diese Aufgabe wird durch eine Werkzeugmaschine nach Anspruch 1 gelöst.

Die der Erfindung zugrunde liegende Aufgabe wird auf diese Weise vollkommen gelöst.

Die Erfinder der vorliegenden Anmeldung haben nämlich erkannt, dass ein limitierender Faktor bei dem Durchsatz von Werkstücken die Tatsache ist, dass zunächst immer fertig bearbeitete Werkstücke aus dem Arbeitsraum abtransportiert werden müssen, bevor zu bearbeitende Werkstücke in den Arbeitsraum hineintransportiert werden.

Insbesondere wenn die Werkzeugmaschinen zu Bearbeitungszentren oder Transferstraßen kombiniert werden sollen, wird - wie bei der gattungsgemäßen Werkzeugmaschine - im Stand der Technik immer eine Transportvorrichtung vorgesehen, die Werkstücke zu dem jeweiligen Arbeitsraum transportiert, wo sie dann beispielsweise auf eine Vorrichtung umgesetzt und dort eingespannt werden, bevor sie bearbeitet werden können.

Weil nun erfindungsgemäß zwei Transportvorrichtungen vorgesehen sind, kann die erste Transportvorrichtung nach Beendigung der Bearbeitung des Werkstückes bereitstehen, um das fertige Werkstück aufzunehmen, während auch die zweite Transportvorrichtung mit noch zu bearbeitenden Werkstücken bereits im Arbeitsraum bereitsteht, um das nächste zu bearbeitende Werkstück vorrätig zu halten, das dann entweder unmittelbar auf der Transportvorrichtung oder aber nach Umsetzen in eine Vorrichtung bearbeitet wird.

Auf diese Weise kann ein schneller Abtransport der Fertigteile und parallel ein schneller Hintransport der Rohteile realisiert werden, der Werkstücktransport in der Werkzeugmaschine ist damit zeitlich von dem äußeren Be-/Entladen entkoppelt. Die Transportvorrichtungen können ferner wie ein Puffer oder ein interner Zwischenspeicher wirken, so dass der Werkstückwechsel nicht mehr limitierend für den Durchsatz der neuen Werkzeugmaschine ist.

Vor diesem Hintergrund betrifft die vorliegende Erfindung ferner ein Verfahren zum Bearbeiten von Werkstücken mit der neuen Werkzeugmaschine, bei dem zu bearbeitende Werkstücke auf eine der Transportvorrichtungen geladen und durch diese in den Arbeitsraum hineintransportiert werden, um sie zu bearbeiten, und bei dem durch die andere Transportvorrichtung bereits fertig bearbeitete Werkstücke aus dem Arbeitsraum heraustransportiert werden, das dadurch gekennzeichnet ist, dass zumindest zwei Werkstücke zeitgleich durch eine Bearbeitungseinheit mit einer entsprechenden Anzahl von Arbeitsspindeln bearbeitet werden, während an den Arbeitsspindeln der anderen Bearbeitungseinheit Werkzeuge gewechselt werden.

Beide Transportvorrichtungen dienen also dem gleichen Zweck, sie transportieren alternierend zu bearbeitende Werkstücke in den Arbeitsraum hinein und fertig bearbeitete Werkstücke aus dem Arbeitsraum wieder heraus.

Der konstruktive Aufwand für eine zweite derartige Transportvorrichtung ist gering, denn im einfachsten Fall ist lediglich ein auf einer Führung angeordneter Wagen vorzusehen, der zwischen der Be-/Entladestation sowie dem Arbeitsraum hin- und herfährt. An die Positioniergenauigkeit dieses Wagens sind nur geringe Anforderungen zu stellen, denn die Werkstücke können beispielsweise von Greifern ergriffen und transportiert werden, es ist lediglich erforderlich, dass die Werkstücke dort fest und positionsgenau eingespannt werden, wo sie auch bearbeitet werden, in der Regel also auf der im Allgemeinen Vorrichtung genannten Spannvorrichtung, die häufig als Wiegenvorrichtung ausgebildet ist, um die Werkstücke auch schwenken zu können.

In einer Weiterbildung ist es dann bevorzugt, wenn neben der ersten Bearbeitungseinheit eine zweite Bearbeitungseinheit derart angeordnet ist, dass sie alternierend zu der ersten Bearbeitungseinheit von derselben Richtung her auf die Werkstücke in dem Arbeitsraum zugreifen kann.

Auch durch diese Maßnahme wird der Durchsatz von Werkstücken deutlich erhöht, denn während die erste Bearbeitungseinheit jetzt das Werkstück beispielsweise an einer ersten Seite bearbeitet, können an der zweiten Bearbeitungseinheit die Werkzeuge ausgewechselt werden, so dass der Werkzeugwechsel jetzt nicht als Nebenzeit den Durchsatz von Werkstücken reduziert, sondern hauptzeitparallel erfolgt.

Obwohl es auf den ersten Blick unvorteilhaft erscheinen mag, zwei Bearbeitungseinheiten seitlich nebeneinander in einer Werkzeugmaschine vorzusehen, die somit von derselben Richtung her auf zu bearbeitende Werkstücke zugreifen, ergibt sich gegenüber bekannten Werkzeugmaschinen, bei denen die Bearbeitungseinheiten auf gegenüberliegenden Seiten angeordnet sind, doch ein entscheidender Vorteil.

Wenn die Bearbeitungseinheiten nämlich auf gegenüberliegenden Seiten eines Werkstückes angeordnet sind, so muss das Werkstück beispielsweise immer verschwenkt werden, wenn es an seiner ersten Seite zuerst mit der ersten Bearbeitungseinheit und dann mit der zweiten Bearbeitungseinheit bearbeitet werden soll. Dieses Verschwenken beeinträchtigt jedoch in an sich bekannter Weise die Bearbeitungsgenauigkeit, wobei auch das Schwenken und Neupositionieren des oder der Werkstücke Nebenzeit ist, die den Durchsatz verringert.

Mit zwei seitlich nebeneinander angeordneten Bearbeitungseinheiten kann jetzt das Werkstück in seiner Aufspannung verbleiben, sobald die erste Bearbeitungseinheit ihren Bearbeitungsvorgang beendet hat, wird sie von dem Werkstück weggefahren und zeitgleich wird die zweite Bearbeitungseinheit mit bereits eingewechselten neuen Werkzeugen zugestellt, so dass eine sehr kurze Span-zu-Span-Zeit realisiert werden kann.

Ein weiterer Vorteil bei dieser Anordnung besteht darin, dass der Werkzeugwechsel nicht mehr zeitlimitierend ist, so dass konstruktiv einfacher aufgebaute Werkzeugmagazine vorgesehen sein können. Ferner ist es jetzt möglich, stationäre Werkzeugmagazine zu verwenden, die die Bearbeitungseinheiten jeweils zum Werkzeugwechsel parallel zur Hauptzeit, wenn also die jeweils andere Bearbeitungseinheit das Werkstück gerade bearbeitet, anfahren können.

Bei bekannten Werkzeugmaschinen, die nur eine Bearbeitungseinheit aufweisen, sind derartige stationäre Werkzeugmagazine unerwünscht, da sie wegen des Anfahrens des Werkzeugmagazines und des erneuten Zustellens zum Werkstück zu langen Nebenzeiten führen, der Werkzeugwechsel sich also als negativ zeitlimitierend erweist. Bei den bekannten Werkzeugmaschinen werden daher die Werkzeugmagazine mit den Bearbeitungseinheiten gekoppelt, was jedoch bedeutet, dass sich die bewegten Massen deutlich erhöhen, so dass die erzielbaren Beschleunigungen für das Zustellen und Wegfahren der Bearbeitungseinheiten begrenzt sind.

Da jetzt erfindungsgemäß die Werkzeugmagazine nicht mehr mit den Bearbeitungseinheiten mitfahren müssen, ist die Masse der Bearbeitungseinheiten geringer als im Stand der Technik, so dass höhere Beschleunigungen und damit schnellere Verfahrgeschwindigkeiten erreicht werden.

Hinzu kommt, dass stationäre Werkzeugmagazine konstruktiv deutlich geringere Anforderungen stellen, so dass die neue Werkzeugmaschine trotz der beiden Bearbeitungseinheiten und der beiden Werkzeugmagazine konstruktiv einfach aufgebaut ist.

Nachdem die Verwendung von zwei seitlich nebeneinander angeordneten Bearbeitungseinheiten auch für sich genommen, also ohne die beiden Transportvorrichtungen, neu und erfinderisch ist, betrifft die vorliegende Erfindung ferner eine Werkzeugmaschine mit zumindest zwei Bearbeitungseinheiten mit jeweils zumindest zwei Arbeitsspindeln zur Aufnahme von Werkzeugen, um in einem Arbeitsraum Werkstücke zu bearbeiten, wobei die Bearbeitungseinheiten derart nebeneinander angeordnet sind, dass sie alternierend von derselben Richtung her auf die Werkstücke in dem Arbeitsraum zugreifen können.

Bei derartigen Werkzeugmaschinen ist es dann bevorzugt, wenn jede Transportvorrichtung einen entlang einer Führung verfahrbaren Wagen zur Aufnahme von zumindest zwei Werkstücken aufweist, wobei vorzugsweise die Führung der zweiten Transportvorrichtung parallel zu der Führung der ersten Transportvorrichtung angeordnet ist.

Bei dieser Maßnahme ist von Vorteil, dass konstruktiv einfache Transportvorrichtungen verwendet werden, die zudem nebeneinander verlaufen, so dass die Handhabungseinrichtungen ohne großen konstruktiven Aufwand sowohl auf die eine als auch auf die andere Transportvorrichtung zugreifen können.

Weiter ist es bevorzugt, wenn an der Be-/Entladestation eine Ladevorrichtung vorgesehen ist, um eine der Transportvorrichtungen mit zu bearbeitenden Werkstücken zu beladen, und von der jeweils anderen Transportvorrichtung bearbeitete Werkstücke zu entladen.

Hier ist von Vorteil, dass lediglich eine Ladevorrichtung verwendet werden muss, um beide Transportvorrichtungen zu bedienen, wobei die zu bearbeitenden Werkstücke beispielsweise über ein erstes Transportband herangeführt werden und die bearbeiteten Werkstücke auf ein zweites Transportband gelegt werden, das sie abtransportiert.

Weiter ist es bevorzugt, wenn in dem Arbeitsraum zumindest eine Vorrichtung zum Einspannen von zu bearbeitenden Werkstücken vorgesehen ist, und wenn eine Umsetzeinrichtung vorgesehen ist, um Werkstücke zwischen der zumindest einen Vorrichtung und der oder den Transportvorrichtungen umzusetzen, wobei die Umsetzvorrichtung vorzugsweise eine Greifervorrichtung an der Bearbeitungseinheit umfasst.

Auch diese Maßnahme ist konstruktiv von Vorteil, denn die Transportvorrichtungen dienen lediglich zum Zu- und Abtransport der Werkstücke, die eigentliche Bearbeitung folgt an auf der Vorrichtung aufgespannten Werkstücken. Wie bereits erwähnt, sind daher an die Positioniergenauigkeit und den Aufbau der Transportvorrichtungen nur geringe Anforderungen zu stellen, so dass diese preiswert ausgelegt sein können.

Weiter ist von Vorteil, wenn die Umsetzvorrichtung eine Greifervorrichtung an einer der Bearbeitungseinheiten umfasst, denn dann können die Verstellmöglichkeiten der Bearbeitungseinheit verwendet werden, um den Greifer zu den Werkstücken zuzustellen, sei es auf der Vorrichtung oder auf einem Wagen der Transportvorrichtung.

Zwar wäre es möglich, sog. Werkzeuggreifer zu verwenden, die in die Arbeitsspindeln eingespannt werden, dadurch wird jedoch ein Magazinplatz in den Werkzeugmagazinen besetzt, weshalb erfindungsgemäß die Greifervorrichtung zusätzlich zu den Arbeitsspindeln an der Bearbeitungseinheit vorgesehen ist. Die Greifervorrichtung kann dabei entweder stationär an der oder jeder Bearbeitungseinheit angeordnet sein, wobei es auch möglich ist, die Greifervorrichtung beispielsweise höhenverstellbar auszubilden, so dass sie bei der Bearbeitung von Werkstücken nach oben gefahren werden kann, so dass sie nicht mit den Werkstücken kollidieren kann, während sie zum Umsetzen von Werkstücken nach unten gefahren wird.

Allgemein ist es bevorzugt, wenn jede Bearbeitungseinheit zumindest zwei Arbeitsspindeln aufweist, und die zumindest eine Vorrichtung zur Aufnahme von zumindest so vielen Werkstücken ausgelegt ist, wie Arbeitsspindeln in einer Bearbeitungseinheit vorgesehen sind.

Bei dieser Maßnahme ist von Vorteil, dass beispielsweise zwei Werkstücke zeitgleich bearbeitet werden können, wobei hierzu zwar zwei Arbeitsspindeln, jedoch nur eine Verstellvorrichtung erforderlich ist, um die beiden Arbeitsspindeln relativ zu den in die Vorrichtung eingespannten Werkstücken zu verfahren.

Auf diese Weise ist es möglich, zeitgleich zwei oder mehr identische Teile zu fertigen. Eine derartige satzweise Fertigung von Werkstücken bringt bei der Dokumentation und dem Qualitätsmanagement Vorteile, ferner können auf diese Weise auch "rechte und linke" Teile passgenau gefertigt werden.

Wenn auf den Vorteil des hauptzeitparallelen Werkzeugwechsels verzichtet werden kann, können auf der Vorrichtung auch so viele Werkstücke aufgespannt werden, wie in beiden Bearbeitungseinheiten zusammen Arbeitsspindeln vorgesehen sind. Wenn beispielsweise zwei Bearbeitungseinheiten mit jeweils zwei Arbeitsspindeln vorgesehen sind, können auf der Vorrichtung also vier Werkstücke aufgespannt werden, wobei die eine Bearbeitungseinheit dann beispielsweise einen Satz von zwei rechten Teilen und die andere Bearbeitungseinheit einen Satz von zwei linken Teilen fertigt.

Alternativ ist es auch möglich, in dem Arbeitsraum zwei Vorrichtungen vorzusehen, die jeweils so viele Werkstücke aufnehmen können, wie in einer Bearbeitungseinheit Arbeitsspindeln vorhanden sind. Dies hat insbesondere dann Vorteile, wenn mit der einen Bearbeitungseinheit "linke Teile" und mit der anderen Bearbeitungseinheit "rechte Teile" gefertigt werden sollen.

In all den Fällen wird zwar auf den Vorteil des hauptzeitparallelen Werkzeugwechsels verzichtet, durch die beiden Transportvorrichtungen ergibt sich aber dennoch der oben erwähnte Vorteil des schnelleren Durchsatzes von Werkstücken durch die neue Werkzeugmaschine.

Es sei noch erwähnt, dass bei der satzweisen Fertigung von Teilen in sozusagen einer Aufspannung und ein und demselben Bearbeitungsdurchgang Vorteile nicht nur hinsichtlich der Dokumentation und des Qualitätsmanagements bestehen, die "Passgenauigkeit" der so gefertigten Teile zueinander ist deutlich größer, da sie sozusagen zur selben Zeit gefertigt werden, sich bei ihnen also die identischen thermischen Deflektionen der Werkzeugmaschine auswirken.

Würden rechte und linke Teile beispielsweise auf zwei verschiedenen Werkzeugmaschinen gefertigt, so wäre die Passgenauigkeit der rechten und linken Teile zueinander nicht in dem Maße sicherzustellen wie auf der neuen Werkzeugmaschine.

Allgemein ist es noch bevorzugt, wenn zumindest ein Werkzeugmagazin für in die Arbeitsspindeln einzuwechselnde Werkzeuge, vorzugsweise ein Werkzeugmagazin für jede Bearbeitungseinheit, vorgesehen ist.

Obwohl es möglich ist, für beide Bearbeitungseinheiten ein gemeinsames Werkzeugmagazin vorzusehen, bietet der Einsatz von zwei Werkzeugmagazinen weitere Vorteile. Zum einen wird die Zahl der Speicherplätze für Werkzeuge erhöht, zum anderen können die Werkzeugmagazine so angeordnet sein, dass sich die beiden Bearbeitungseinheiten beim Werkzeugwechsel nicht gegenseitig behindern können.

Schließlich betrifft die vorliegende Erfindung noch ein Bearbeitungszentrum mit zwei neuen Werkzeugmaschinen, die auf gegenüberliegenden Seiten einer gemeinsamen Be-/Entladestation angeordnet sind.

Auch diese Maßnahme ist konstruktiv von Vorteil, denn die Be-/Entladestation muss lediglich einmal vorgesehen sein, obwohl sie zwei Werkzeugmaschinen "bedient".

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist in der Zeichnung dargestellt und wird in der nachfolgenden Beschreibung näher erläutert. Es zeigen:
- Fig. 1: die neue Werkzeugmaschine in einer schematischen Vorderansicht;
- Fig. 2: einen Schnitt durch die neue Werkzeugmaschine längs der Linie II-II;
- Fig. 3: eine ausschnittsweise und schematische Draufsicht auf die Werkzeugmaschine gemäß Fig. 1;
- Fig. 4: eine Darstellung wie Fig. 3, jedoch zu einem anderen Zeitpunkt der Bearbeitung von Werkstücken;
- Fig. 5: eine Darstellung wie Fig. 3 und Fig. 4, jedoch zu noch einem anderen Zeitpunkt der Werkstückbearbeitung; und
- Fig. 6: eine Darstellung wie Fig. 3, jedoch mit einer Vorrichtung zum Aufspannen von vier Werkstücken, die zeitgleich von zwei Bearbeitungseinheiten mit jeweils zwei Arbeitsspindeln bearbeitet werden.

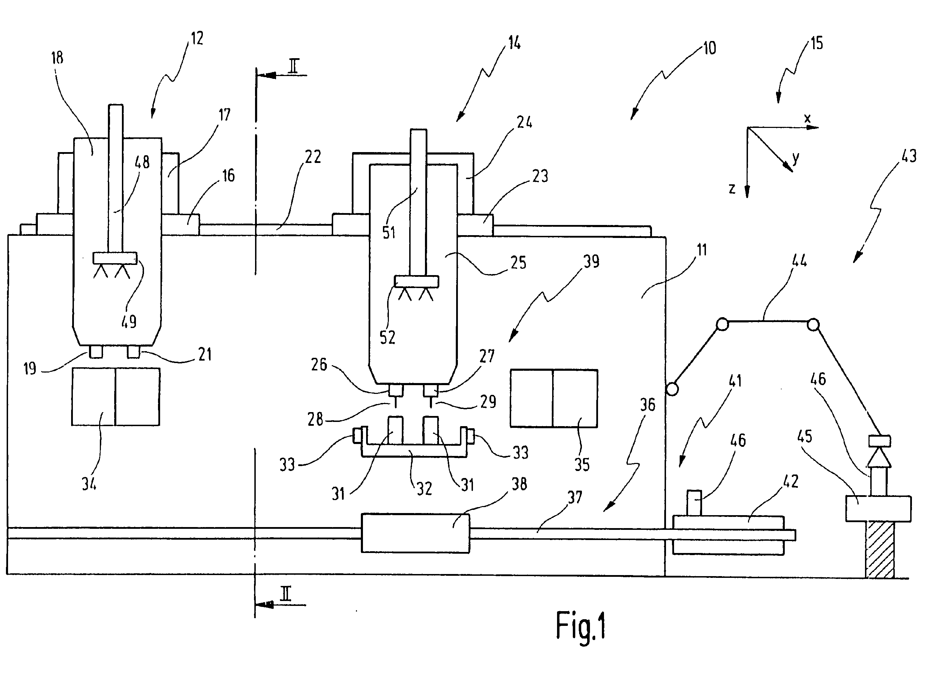

In Fig. 1 ist in schematischer Vorderansicht eine Werkzeugmaschine 10 gezeigt, die ein Maschinengestell 11 aufweist. An dem Maschinengestell 11 sind eine erste Bearbeitungseinheit 12 sowie eine zweite Bearbeitungseinheit 14 in den Koordinatenrichtungen x, y, z verschieblich angeordnet, wie es durch ein Koordinatenkreuz 15 angedeutet ist.

Die beiden Bearbeitungseinheiten 12, 15 sind in x-Richtung seitlich nebeneinander angeordnet.

Die erste Bearbeitungseinheit 12 weist einen in x-Richtung verfahrbaren x-Schlitten 16 auf, an dem ein in y-Richtung verfahrbarer y-Schlitten 17 angeordnet ist. Der y-Schlitten 17 trägt einen Spindelkopf 18, der in bekannter Weise in z-Richtung verfahrbar ist.

In dem Spindelkopf 18 ist eine erste vertikal ausgerichtete Arbeitsspindel 19 sowie eine zweite vertikal ausgerichtete Arbeitsspindel 21 gelagert.

Oben auf dem Maschinengestell 11 ist eine Führungsschiene 22 gezeigt, auf der der x-Schlitten 16 in x-Richtung verfahrbar ist.

In gleicher Weise weist die zweite Bearbeitungseinheit 14 einen x-Schlitten 23, einen y-Schlitten 24 sowie einen Spindelkopf 25 auf, der eine erste vertikale Arbeitsspindel 26 sowie eine zweite vertikale Arbeitsspindel 27 trägt.

In die Arbeitsspindeln 26, 27 sind Werkzeuge 28, 29 eingespannt, mit denen zwei Werkstücke 31 bearbeitet werden, die auf einer als Wiege ausgebildeten Vorrichtung 32 aufgespannt sind. Die Vorrichtung 32 ist über zwei Lagerböcke 33 schwenkbar an dem Maschinengestell 11 gelagert.

In dem Maschinengestell sind noch zwei Klappenpaare 34, 35 gezeigt, hinter denen jeweils ein Werkzeugmagazin für die erste Bearbeitungseinheit 12 bzw. die zweite Bearbeitungseinheit 14 angeordnet ist. Zum Werkzeugwechsel werden die Klappen 34 bzw. 35 geöffnet und das Werkzeugmagazin fährt in y-Richtung aus dem Maschinengestell heraus. Die Bearbeitungseinheiten 12 bzw. 14 fahren das Werkzeugmagazin dann an, um im Pick-up-Verfahren Werkzeuge zu wechseln.

Ein derartiges Werkzeugmagazin sowie ein Werkzeugwechsel mit zwei parallel zueinander angeordneten Arbeitsspindeln 19, 21 bzw. 26, 27 ist aus der DE 103 44 642 A1 der hiesigen Anmelderin bekannt, so dass wegen weiterer Details auf diese Offenlegungsschrift verwiesen wird, deren Inhalt hiermit durch Bezugnahme zum Gegenstand der vorliegenden Anmeldung gemacht wird.

Die Werkzeugmaschine 10 weist ferner noch eine erste Transportvorrichtung 36 auf, deren Führung 37 sich in x-Richtung erstreckt. An der Führung 37 ist ein Wagen 38 in x-Richtung verfahrbar gelagert. In Fig. 1 befindet sich der Wagen 38 in einem Arbeitsraum 39 der Werkzeugmaschine 10, also unmittelbar an der Vorrichtung 32.

Die Werkzeugmaschine 10 weist noch eine zweite Transportvorrichtung 41 auf, deren Führung in Fig. 1 nicht gezeigt ist, da sie in y-Richtung hinter der Führungsschiene 37 der ersten Transportvorrichtung liegt. Dies bedeutet, dass die beiden Führungen der beiden Transportvorrichtungen 36 und 41 parallel zueinander in x-Richtung verlaufen.

Die zweite Transportvorrichtung 41 weist ebenfalls einen Wagen 42 auf, der sich in Fig. 1 bei einer Be-/Entladestation 43 befindet. Die Be-/Entladestation weist eine schematisch angedeutete Ladevorrichtung 44 auf, mit der von einem Transportband 45 zu bearbeitende Werkstücke 46 auf den Wagen 42 geladen werden.

In gleicher Weise ist die Ladevorrichtung 44 dazu ausgelegt, Werkstücke von dem Wagen 38 zu entnehmen und auf ein in Fig. 1 nicht gezeigtes Transportband umzuladen, das fertig bearbeitete Werkstücke abtransportiert.

Zu diesem Zweck werden die Werkstücke 31 nach deren Fertigstellung von der Vorrichtung 32 auf den Wagen 38 mit Hilfe von Umsetzeinrichtungen 48, 51 umgesetzt, die in z-Richtung verstellbar an den Spindelköpfen 18 bzw. 24 angeordnet ist.

Jede Umsetzeinrichtung 48, 51 weist eine Greifervorrichtung 49 bzw. 52 auf, die zwei Werkstücke 31 bzw. 46 ergreifen und zwischen der Vorrichtung 32 und einem der Wagen 38 und 42 umsetzen kann.

Wie dies nachstehend noch ausführlich beschrieben wird, transportiert der Wagen 42 zu bearbeitende Werkstücke 46 in den Arbeitsraum 39 und wartet dort, bis die Werkstücke 31 fertig bearbeitet wurden. Dann werden die Werkstücke 31 mit der Greifervorrichtung 49 oder 52 von der Vorrichtung 32 auf den Wagen 38 umgeladen, der dann in die Be-/Entladestation 43 fährt, wo die fertiggestellten Werkstücke 31 auf ein Transportband umgeladen werden.

Sobald die Werkstücke 31 auf den Wagen 38 umgesetzt wurden, werden die Werkstücke 46 von dem Wagen 42 entnommen und in die Vorrichtung 32 eingesetzt, wo sie bearbeitet werden, während der Wagen 38 entladen und mit neuen Werkstücken beladen wird.

Auf diese Weise ist das Handling in der Be-/Entladestation 43 nicht zeitlimitierend für den Werkstückwechsel, denn in dem Arbeitsraum 39 befindet sich immer dann ein Wagen 38 bzw. 42 mit zu bearbeitenden Werkstücken sowie ein freier Wagen 42 bzw. 38 zur Aufnahme von zu bearbeitenden Werkstücken, wenn ein Werkstückwechsel ansteht.

Die Werkstücke 31 bzw. 46 werden in der Vorrichtung 32 nun alternierend durch die Bearbeitungseinheiten 12 und 14 bearbeitet. Während in Fig. 1 die Bearbeitungseinheit 14 die Werkstücke 31 bearbeitet, findet an der Bearbeitungseinheit 12 hauptzeitparallel ein Werkzeugwechsel statt. Sobald die Bearbeitung der Werkstücke 31 mit den Werkzeugen 28, 29 beendet ist, fährt die Bearbeitungseinheit 14 das Werkzeugmagazin hinter den Klappen 35 an, während die Bearbeitungseinheit 12 die Vorrichtung 32 anfährt und sofort mit der weiteren Bearbeitung der Werkstücke 31 fortfahren kann, ohne dass eine Nebenzeit für den Werkzeugwechsel abgewartet werden muss.

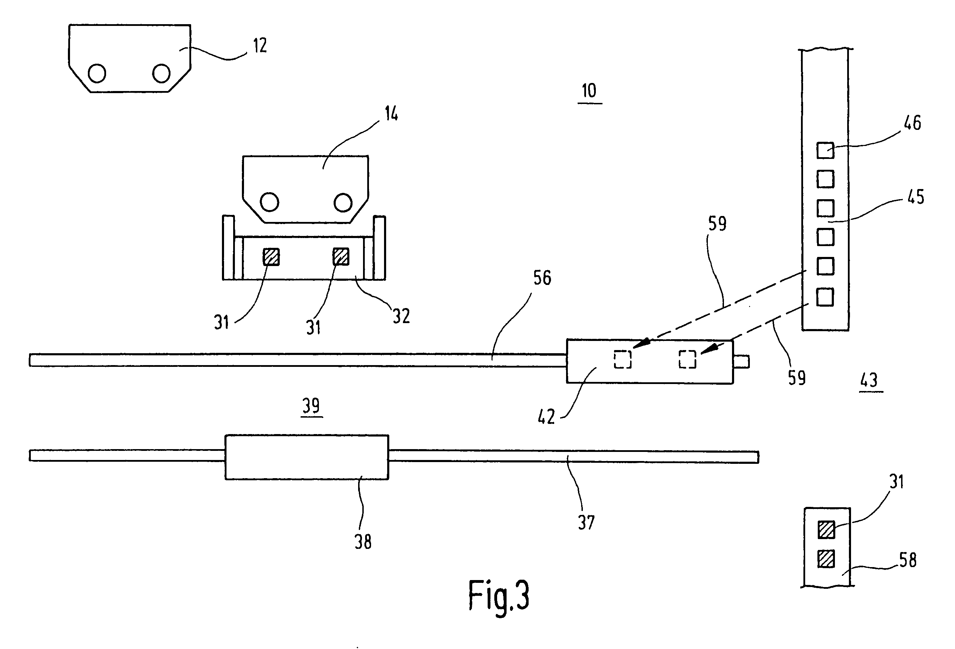

In Kombination sorgen die beiden von der gleichen Richtung auf die Werkzeuge 31 zugreifenden Bearbeitungseinheiten 12 und 14 mit den Transportvorrichtungen 36 und 41 dafür, dass die Nebenzeiten bei der Bearbeitung von Werkstücken 31, 46 mit der neuen Werkzeugmaschine 10 deutlich verringert werden, so dass der Durchsatz von bearbeiteten Werkstücken bei der neuen Werkzeugmaschine 10 deutlich erhöht ist, was im Zusammenhang mit den Fig. 3 bis 6 noch ausführlicher erläutert werden wird.

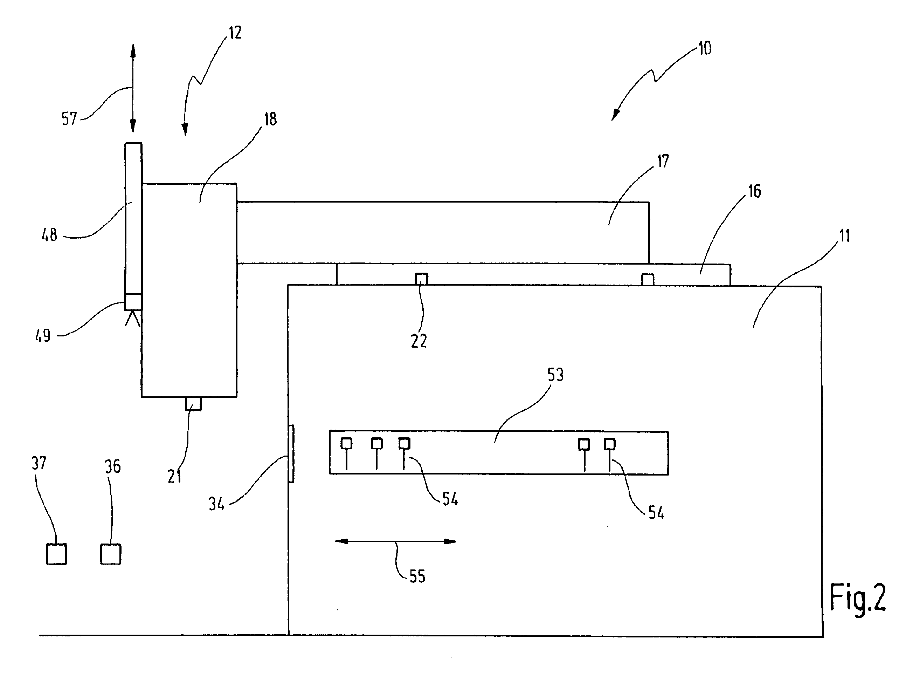

In Fig. 2 ist zunächst jedoch die Werkzeugmaschine 10 aus Fig. 1 noch in Richtung der Pfeile II-II aus Fig. 1 geschnitten dargestellt, so dass die Anordnung der ersten Bearbeitungseinheit 12 an dem Maschinengestell 11 zu sehen ist. Ferner sind an dem Maschinengestell 11 die Klappen 34 zu erkennen, hinter denen sich ein Werkzeugmagazin 53 befindet, in dem Werkzeuge 54 gespeichert sind. Das Werkzeugmagazin 53 ist in Richtung eines Pfeils 55 aus den Klappen 34 heraus in Fig. 2 nach links verfahrbar, so dass die Werkzeuge 54 unter dem Spindelkopf 18 zu liegen kommen, wo im Pick-up-Verfahren ein Werkzeugwechsel erfolgen kann, wie er in der zuvor erwähnten DE 103 44 642 A1 für Bearbeitungseinheiten mit Doppelspindel ausführlich beschrieben ist.

Nach dem Werkzeugwechsel wird das Werkzeugmagazin 53 wieder in das Maschinengestell 11 zurückgezogen und die Klappen 34 werden geschlossen, so dass während der Bearbeitung von Werkstücken keine Späne und kein Kühlmittel auf die gespeicherten Werkzeuge 54 gelangen kann.

In Fig. 2 ist ferner noch die Führung 37 der ersten Transportvorrichtung 36 sowie eine Führung 56 der zweiten Transportvorrichtung 41 gezeigt, die Wagen 38 und 42 sind in der gewählten Schnittdarstellung nicht zu erkennen.

Die Anordnung ist bei der Werkzeugmaschine 10 so getroffen, dass die Greifervorrichtung 49 in Richtung eines Pfeils 57 nach unten gefahren werden kann, um durch weiteres Verfahren des Spindelkopfes 18 dann sowohl den auf der Führung 37 befindlichen Wagen 38 als auch auf der Führung 56 befindlichen Wagen 42 anzufahren, dort Werkstücke abzuladen oder aufzunehmen und diese dann auf der Vorrichtung 32 abzulegen, die in Fig. 2 ebenfalls nicht zu erkennen ist.

Fig. 3 ist eine Draufsicht auf die Bearbeitungssituation, wie sie in Fig. 1 gezeigt ist, wobei jedoch lediglich die Bearbeitungseinheiten 12, 14, die Vorrichtung 32 sowie die Wagen 38 und 42 und schließlich noch das Transportband 45 zu erkennen sind, auf dem zu bearbeitende Werkstücke 46 zugeführt werden.

Ferner ist in Fig. 3 noch ein Transportband 58 zu erkennen, auf dem fertig bearbeitete Werkstücke 31 abgelegt werden.

In der in Fig. 3 gezeigten Phase der Bearbeitung werden die Werkstücke 31 auf der Vorrichtung 32 gerade durch die Bearbeitungseinheit 14 bearbeitet, während die Bearbeitungseinheit 12 in ihre Werkzeugwechselstellung gefahren ist, um neue Werkzeuge einzuwechseln.

Der Wagen 38 wartet im Arbeitsraum 39 darauf, die fertig bearbeiteten Werkstücke 31 zu übernehmen, während der Wagen 42 an der Be-/Entladestation 43 gerade zu bearbeitende Werkstücke 46 übernimmt, was durch gestrichelte Pfeile 59 angedeutet ist.

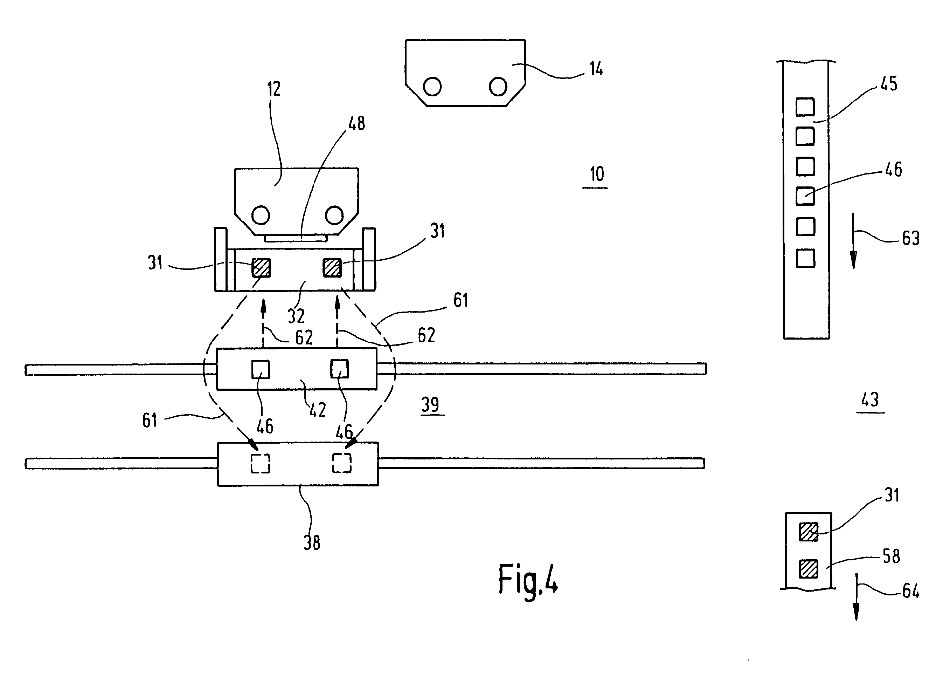

Als Nächstes wird der Wagen 42 jetzt ebenfalls in den Arbeitsraum 39 gefahren. Nachdem die Bearbeitung der Werkstücke 31 beendet ist, fährt gemäß Fig. 4 jetzt die Bearbeitungseinheit 12 an die Vorrichtung 32, wobei sie ihre in Fig. 4 lediglich schematisch angedeutete Umsetzeinrichtung 48 nach unten fährt, so dass die Werkstücke 31 auf den Wagen 38 umsetzen kann, was durch Striche 61 angedeutet ist. Danach übernimmt sie die Werkstücke 46 von dem Wagen 42 und lädt sie auf die Vorrichtung 32, was durch gestrichelte Pfeile 62 angedeutet ist.

Der Wagen 38 mit den fertig bearbeiteten Werkstücken 31 fährt jetzt in Fig. 4 nach rechts in die Be-/Entladestation 43. Das Transportband 45 bewegt zu bearbeitende Werkstücke 46 in Richtung eines Pfeils 63 und das Transportband 58 fertig bearbeitete Werkstücke 31 in Richtung eines Pfeils 64.

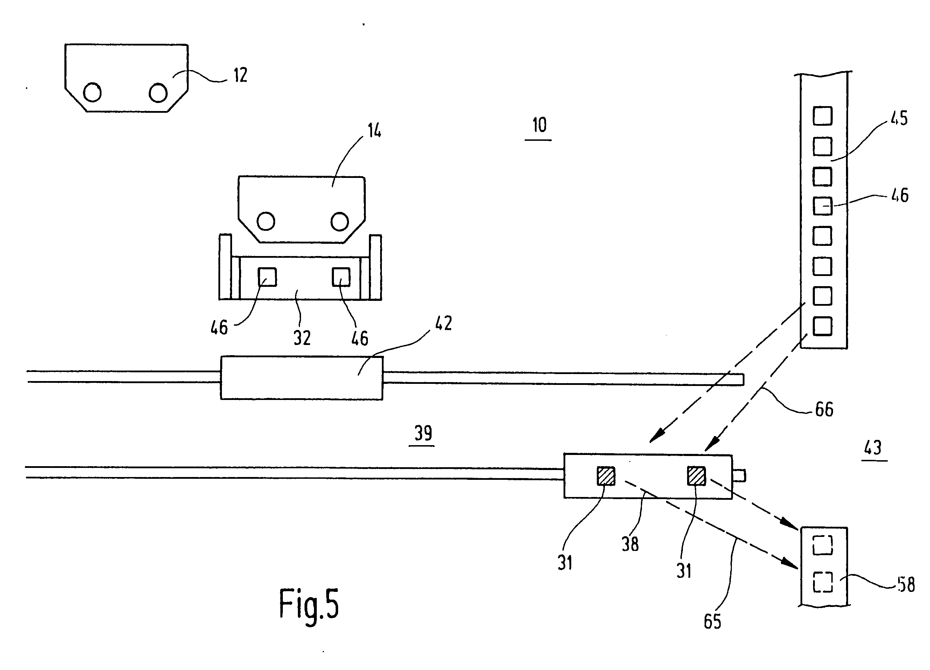

Die Bearbeitungseinheit 14, die sich in ihrer Werkzeugwechselstellung befindet, wechselt in der Zwischenzeit die nächsten Werkzeuge ein, um die Werkstücke 46 auf der Vorrichtung 32 jetzt bearbeiten zu können. Diese Situation ist in Fig. 5 dargestellt.

Die fertig bearbeiteten Werkstücke 31 auf dem Wagen 38 werden jetzt auf das Transportband 58 geladen, was durch Pfeile 65 angedeutet ist. Danach werden zu bearbeitende Werkstücke 46 auf den Wagen 38 geladen, was durch Pfeile 66 angedeutet ist.

Der Wagen 42 verbleibt im Arbeitsraum 39, um die Werkstücke 46 zu übernehmen, wenn sie fertig bearbeitet wurden. Nachdem die Bearbeitung der Werkstücke 46 mit der Bearbeitungseinheit 14 beendet wurde, fährt diese in ihre Werkzeugwechselposition, während die Bearbeitungseinheit 12 an die Vorrichtung 32 herangefahren wird, um die Werkstücke 46 von derselben Seite her zu bearbeiten, wie zuvor die Bearbeitungseinheit 14.

Der in den Fig. 3 bis 5 gezeigte Bearbeitungsablauf wiederholt sich zyklisch, wobei immer ein Wagen 38, 42 zu bearbeitende Werkstücke 46 übernimmt, die in den Arbeitsraum 39 transportiert, wo sie auf die Vorrichtung 32 umgesetzt und fertig bearbeitet werden. Danach werden die fertig bearbeiteten Werkstücke 31 wieder auf den entsprechenden Wagen 38 bzw. 42 zurückgesetzt und zurück in die Be-/Entladestation 43 verfahren. Parallel wurde der jeweils andere Wagen 42, 38 mit zu bearbeitenden Werkstücken 46 beladen und ebenfalls in den Arbeitsraum 39 verfahren.

Selbstverständlich ist es möglich, rechts neben der Be-/Entladestation 43 eine weitere Werkzeugmaschine 10 vorzusehen, so dass die Be-/Entladestation 43 sozusagen zwei Werkzeugmaschinen 10 bedient, die jeweils so aufgebaut sind, wie die Werkzeugmaschine 10 gemäß den Fig. 1 bis 5.

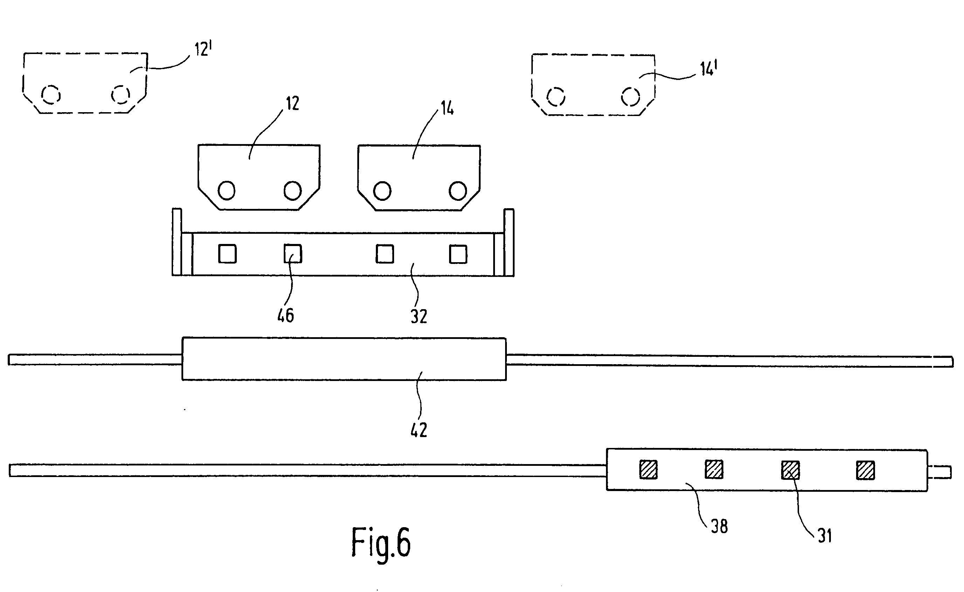

Wenn der Zeitvorteil durch den hauptzeitparallelen Werkzeugwechsel an den Bearbeitungseinheiten 12 und 14 nicht benötigt wird, kann die Vorrichtung 32 auch so ausgelegt sein, dass sie vier zu bearbeitende Werkstücke 46 trägt, die dann von den Bearbeitungseinheiten 12 und 14 zeitgleich und parallel bearbeitet werden, wie dies in Fig. 6 gezeigt ist.

Alternativ zu einer Vorrichtung 32 für vier Werkstücke können auch zwei Vorrichtungen 32 für jeweils zwei Werkstücke in x-Richtung nebeneinander angeordnet sein.

Während bei den Ausführungsbeispielen gemäß Fig. 1 bis 5 die Vorrichtung 32 sowie die Wagen 38 und 42 dazu ausgelegt sind, so viele Werkstücke 31, 46 aufzunehmen, wie es der Anzahl von Arbeitsspindeln 19, 21; 26, 27 in den Bearbeitungseinheiten 12 und 14 entspricht, sind sie gemäß Fig. 6 dazu ausgelegt, so viele Werkstücke aufzunehmen, wie in den Bearbeitungseinheiten 12 und 14 zusammen an Arbeitsspindeln 19, 21; 26, 27 vorhanden sind. Selbstverständlich ist es möglich, in jeder Bearbeitungseinheit 12 und 14 statt zwei Arbeitsspindeln 19, 21; 26, 27 auch drei oder mehr derartiger Arbeitsspindeln vorrätig zu halten.

Es sei noch erwähnt, dass die Fig. 6 einen Bearbeitungszustand wie in Fig. 5 zeigt, jedoch jetzt mit vier und nicht mit zwei Werkstücken pro Wagen 42, 38.

Der Werkzeugwechsel an den Bearbeitungseinheiten 12, 14 erfolgt jetzt nicht mehr hauptzeitparallel, beide Bearbeitungseinheiten 12, 14 werden zum Werkzeugwechsel in ihre Werkzeugwechselpositionen 12' bzw. 14' verfahren, der Zeitvorteil durch die beiden Wagen 38 und 42 wird jedoch auch bei dem Ausführungsbeispiel gemäß Fig. 6 erzielt.

## Patentansprüche

1. Werkzeugmaschine mit zumindest einer Bearbeitungseinheit (12, 14) mit zumindest einer Arbeitsspindel (19, 21; 26, 27) zur Aufnahme von Werkzeugen (28, 29, 54), um in einem Arbeitsraum (39) Werkstücke (31, 46) zu bearbeiten, und zwei Transportvorrichtungen (36, 41), mit denen Werkstücke (31) zwischen dem Arbeitsraum (39) und einer Be-/Entladestation (43) transportiert werden,
**dadurch gekennzeichnet, dass** die Werkzeugmaschine zumindest zwei Bearbeitungseinheiten mit jeweils zwei Arbeitsspindeln aufweist und derart ausgestaltet ist, dass zumindest zwei Werkstücke (31, 46) zeitgleich durch eine Bearbeitungseinheit (12, 14) mit einer entsprechenden Anzahl von Arbeitsspindeln (19, 21; 26, 27) bearbeitet werden, während an den Arbeitsspindeln (26, 27; 19, 21) der anderen Bearbeitungseinheit (14, 12) Werkzeuge (28, 29, 54) gewechselt werden.

2. Werkzeugmaschine nach Anspruch 1, **dadurch gekennzeichnet, dass** seitlich neben der ersten Bearbeitungseinheit (12) eine zweite Bearbeitungseinheit (14) derart angeordnet ist, dass sie alternierend zu der ersten Bearbeitungseinheit (12) von der selben Richtung (z) her auf die Werkstücke (31, 46) in dem Arbeitsraum (39) zugreifen kann.

3. Werkzeugmaschine nach einem der Ansprüche 1 oder 2, **dadurch gekennzeichnet, dass** jede Transportvorrichtung (36, 41) einen entlang einer Führung (37, 56) verfahrbaren Wagen (38, 42) zur Aufnahme von zumindest zwei Werkstücken (31, 46) aufweist.

4. Werkzeugmaschine nach Anspruch 3, **dadurch gekennzeichnet, dass** die Führung (56) der zweiten Transportvorrichtung (41) parallel zu der Führung (37) der ersten Transportvorrichtung (36) angeordnet ist.

5. Werkzeugmaschine nach einem der Ansprüche 1 bis 4, **dadurch gekennzeichnet, dass** an der Be-/Entladestation (43) eine Ladevorrichtung (44) vorgesehen ist, um eine der Transportvorrichtung (41, 36) mit zu bearbeitenden Werkstücken (46) zu beladen, und von der jeweils anderen Transportvorrichtung (36, 41) bearbeitete Werkstücke (31) zu entladen.

6. Werkzeugmaschine nach einem der Ansprüche 1 bis 5, **dadurch gekennzeichnet, dass** in dem Arbeitsraum (39) zumindest eine Vorrichtung (32) zum Einspannen von zu bearbeitenden Werkstücken (36, 46) vorgesehen ist, und dass zumindest eine Umsetzeinrichtung (48, 51) vorgesehen ist, um Werkstücke (31, 46) zwischen der zumindest einen Vorrichtung (32) und der oder den Transportvorrichtungen (36, 41) umzusetzen.

7. Werkzeugmaschine nach Anspruch 6, **dadurch gekennzeichnet, dass** die Umsetzvorrichtung (48, 51) eine Greifervorrichtung (49, 52) an der Bearbeitungseinheit (12, 14) umfasst.

8. Werkzeugmaschine nach einem der Ansprüche 1 bis 7, **dadurch gekennzeichnet, dass** jede Bearbeitungseinheit (12, 14) zumindest zwei Arbeitsspindeln (19, 21; 26, 27) aufweist, und die zumindest eine Vorrichtung (32) zur Aufnahme von zumindest so vielen Werkstücken (31, 46) ausgelegt ist, wie Arbeitsspindeln (19, 21; 26, 27) in einer Bearbeitungseinheit (12, 14) vorgesehen sind.

9. Werkzeugmaschine nach einem der Ansprüche 1 bis 8, **dadurch gekennzeichnet, dass** in dem Arbeitsraum (39) so viele Vorrichtungen (32) angeordnet sind, wie Bearbeitungseinheiten (12, 14) vorgesehen sind.

10. Werkzeugmaschine nach einem der Ansprüche 1 bis 9, **dadurch gekennzeichnet, dass** zumindest ein Werkzeugmagazin (53) für in die Arbeitsspindeln (19, 21; 26, 27) einzuwechselnde Werkzeuge (28, 29, 54) vorgehen ist.

11. Werkzeugmaschine nach 10, **dadurch gekennzeichnet, dass** jeder Bearbeitungseinheit (12, 14) ein Werkzeugmagazin (53) zugeordnet ist.

12. Bearbeitungszentrum mit zwei Werkzeugmaschinen (10) nach einem der Ansprüche 1 bis 11, die auf gegenüberliegenden Seiten einer gemeinsamen Be-/Entladestation (43) angeordnet sind.

13. Verfahren zum Bearbeiten von Werkstücken (31, 46) mit einer Werkzeugmaschine (10) nach einem der Ansprüche 1 bis 11, bei dem zu bearbeitende Werkstücke (46) auf eine der Transportvorrichtungen (41, 36) geladen und durch diese in den Arbeitsraum (39) hinein transportiert werden, um sie zu bearbeiten, und bei dem durch die andere Transportvorrichtung (36, 41 bereits fertig bearbeitete Werkstücke (31) aus dem Arbeitsraum (39) heraus transportiert werden,
wobei zumindest zwei Werkstücke (31, 46) zeitgleich durch eine Bearbeitungseinheit (12, 14) mit einer entsprechenden Anzahl von Arbeitsspindeln (19, 21; 26, 27) bearbeitet werden, während an den Arbeitsspindeln (26, 27; 19, 21) der anderen Bearbeitungseinheit (14, 12) Werkzeuge (28, 29, 54) gewechselt werden.

## Claims

1. Machine tool comprising one machining unit (12, 14) having at least one work spindle (19, 21; 26, 27) for accommodating tools (28, 29, 54) in order to machine workpieces (31, 46) in a working area (39), and comprising two transport devices (36, 41) for transporting workpieces (31) between the working area (39) and a loading/unloading station (43), **characterized in that** the machine tool comprises at least two machining units having at least two work spindles and is arranged such that at least two workpieces (31, 46) are machined at the same time by a machining unit (12, 14) with a corresponding number of work spindles (19, 21; 26, 27), while tools (28, 29, 54) are changed at the work spindles (26, 27; 19, 21) of the other machining unit (14, 12).

2. Machine tool according to claim 1, **characterized in that** a second machining unit (14) is arranged laterally next to the first machining unit (12) in such a way that, alternating with the first machining unit (12), it can access the workpieces (31, 46) in the working area (39) from the same direction (z).

3. Machine tool according to anyone of claims 1 or 2, **characterized in that** each transport device (36, 41) has a carriage (38, 42) which is traversable along a guide (37, 56) and is intended for accommodating at least two workpieces (31, 46).

4. Machine tool according to claim 3, **characterized in that** the guide (56) of the second transport device (41) is arranged parallel to the guide (37) of the first transport device (36).

5. Machine tool according to anyone of claims 1 to 4, **characterized in that** a loading device (44) is provided at the loading/unloading station (43) in order to load one of the transport devices (41, 36) with workpieces (46) to be machined and unload machined workpieces (31) from the respective other transport device (36, 41).

6. Machine tool according to anyone of claims 1 to 5, **characterized in that** at least one fixture (32) for clamping in place workpieces (36, 46) to be machined is provided in the working area (39), and **in that** at least one transfer device (48, 51) is provided in order to transfer workpieces (31, 46) between the at least one fixture (32) and the transport device or devices (36, 41).

7. Machine tool according to claim 6, **characterized in that** the transfer device (48, 51) comprises a gripping device (49, 52) on the machining unit (12, 14).

8. Machine tool according to anyone of claims 1 to 7, **characterized in that** each machining unit (12, 14) has at least two work spindles (19, 21; 26, 27), and the at least one fixture (32) is designed for accommodating at least the same number of workpieces (31, 46) as the number of work spindles (19, 21; 26, 27) provided in a machining unit (12, 14).

9. Machine tool according to anyone of claims 1 to 8, **characterized in that** the number of fixtures (32) arranged in the working area (39) is the same as the number of machining units (12, 14) provided.

10. Machine tool according to anyone of claims 1 to 9, **characterized in that** at least one tool magazine (53) is provided for tools (28, 29, 54) introduced into the work spindles (19, 21; 26, 27) as replacements.

11. Machine tool according to claim 10, **characterized in that** a tool magazine (53) is assigned to each machining unit (12, 14).

12. Machining centre having two machine tools (10) according to anyone of claims 1 to 11, which machine tools are arranged on opposite sides of a common loading/unloading station (43).

13. Method of machining workpieces (31, 46) using a machine tool (10) according to anyone of claims 1 to 13, in which workpieces (46) to be machined are loaded onto one of the transport devices (41, 36) and are transported by said transport device into the working area (39) in order to machine them, and in which already finish-machined workpieces (31) are transported out of the working area (39) by the other transport device (36, 41), wherein at least two workpieces (31, 46) are machined at the same time by a machining unit (12, 14) having a corresponding number of work spindles (19, 21; 26, 27), while tools (28, 29, 54) are changed at the work spindles (26, 27; 19, 21) of the other machining unit (14, 12).

## Revendications

1. Machine-outil comportant au moins une unité d'usinage dotée d'au moins une broche de travail (19, 21 ; 26, 27) destinée à recevoir des outils (28, 29, 54) afin d'usiner des pièces (31, 46) dans une chambre de travail (39) et comportant deux dispositifs de transport (36, 41), au moyen desquels des pièces (31) sont transportées entre la chambre de travail (39) et une station de chargement/déchargement (43),
**caractérisée en ce que** la machine-outil présente au moins deux unités d'usinage dotées respectivement de deux broches de travail et est réalisée de telle sorte qu'au moins deux pièces (31, 46) soient usinées en même temps par une unité d'usinage (12, 14) avec un nombre correspondant de broches de travail (19, 21 ; 26, 27), tandis que des outils (28, 29, 54) sont changés au niveau des broches de travail (26, 27 ; 19, 21) de l'autre unité d'usinage (14, 12).

2. Machine-outil selon la revendication 1, **caractérisée en ce que,** latéralement, à proximité de la première unité d'usinage (12), une deuxième unité d'usinage (14) est disposée de telle sorte qu'elle puisse saisir, en alternance avec la première unité d'usinage (12), depuis la même direction, les pièces (31, 46) se trouvant dans la chambre de travail (39).

3. Machine-outil selon l'une quelconque des revendications 1 ou 2, **caractérisée en ce que** chaque dispositif de transport (36, 41) présente un chariot (38, 42) pouvant être déplacé le long d'une glissière de guidage (37, 56) et destiné à recevoir au moins deux pièces (31, 46).

4. Machine-outil selon la revendication 3, **caractérisée en ce que** la glissière de guidage (56) du deuxième dispositif de transport (41) est disposée de manière parallèle à la glissière de guidage (37) du premier dispositif de transport (36).

5. Machine-outil selon l'une quelconque des revendications 1 à 4, **caractérisée en ce qu'**il est prévu, au niveau de la station de chargement/déchargement (43), un dispositif de chargement (44) afin de charger les pièces à usiner sur un dispositif de transport (41, 36) et afin de décharger les pièces usinées (31) de l'autre dispositif de transport respectif (36, 41).

6. Machine-outil selon l'une quelconque des revendications 1 à 5, **caractérisée en ce qu'**il est prévu dans la salle de travail (39) au moins un dispositif (32) destiné à monter des pièces à usiner (36, 46), et **en ce qu'**il est prévu au moins un dispositif de transfert (48, 51) afin de transférer des pièces (31, 46) entre le dispositif (32) au moins au nombre de un et le ou les dispositifs de transport (36, 41).

7. Machine-outil selon la revendication 6, **caractérisée en ce que** le dispositif de transfert (48, 51) comprend un dispositif de préhension (49, 52) au niveau de l'unité d'usinage (12, 14).

8. Machine-outil selon l'une quelconque des revendications 1 à 7, **caractérisée en ce que** chaque unité d'usinage (12, 14) présente au moins deux broches de travail (19, 21 ; 26, 27), et **en ce que** le dispositif (32) au moins au nombre de un est conçu pour recevoir autant de pièces (31, 46) qu'il est prévu de broches de travail (19, 21 ; 26, 27) dans une unité d'usinage (12, 14).

9. Machine-outil selon l'une quelconque des revendications 1 à 8, **caractérisée en ce que,** dans la chambre de travail (39), il est prévu autant de dispositifs (32) que d'unités d'usinage (12, 14).

10. Machine-outil selon l'une quelconque des revendications 1 à 9, **caractérisée en ce qu'**au moins un magasin d'outils (53) est prévu pour les outils (28, 29, 54) à changer dans les broches de travail (19, 21 ; 26, 27).

11. Machine-outil selon la revendication 10, **caractérisée en ce qu'**à chaque unité d'usinage (12, 14) est associé un magasin d'outils (53).

12. Centre d'usinage comportant deux machines-outils (10) selon l'une quelconque des revendications 1 à 11, qui sont disposées sur des côtés opposés d'une station de chargement/déchargement commune (43).

13. Procédé d'usinage de pièces (31, 46) comportant une machine-outil (10) selon l'une quelconque des revendications 1 à 11, dans le cadre duquel les pièces à usiner (46) sont chargées sur un des dispositifs de transport (41, 36) et transportées par celui-ci dans la chambre de travail (39) afin de les usiner, et dans le cadre duquel les pièces déjà usinées (31) sont transportées hors de la salle de travail (39) par l'autre dispositif de transport (36, 41),
au moins deux pièces (31, 46) étant usinées en même temps par une unité d'usinage (12, 14) au moyen d'un nombre correspondant de broches de travail (19, 21 ; 26, 27), tandis que les outils (28, 29, 54) sont changés au niveau des broches de travail (26, 27 ; 19, 21) de l'autre unité d'usinage (14, 12).
